Europäisches Patentamt

European Patent Office

Office européen des brevets

(19)

(11) Publication number: **0 159 429**
**B1**

# (12) EUROPEAN PATENT SPECIFICATION

(45) Date of publication of patent specification: **15.06.88**

(51) Int. Cl.⁴: **F 02 B 23/10,** F 02 B 17/00

(21) Application number: **84302695.6**

(22) Date of filing: **19.04.84**

(54) **Two-cycle stratified charge gas engine.**

| | |
|---|---|
| (43) Date of publication of application:<br>**30.10.85 Bulletin 85/44** | (73) Proprietor: **Westerman, Howard G.**<br>**743 Blue Lake Circle**<br>**Richardson Texas 75080 (US)** |
| (45) Publication of the grant of the patent:<br>**15.06.88 Bulletin 88/24** | (72) Inventor: **Westerman, Howard G.**<br>**743 Blue Lake Circle**<br>**Richardson Texas 75080 (US)**<br>Inventor: **Allsopp, Lewis E. "Grimbosq"**<br>**Newport Road**<br>**Great Bridgeford Stafford ST18 9PR (GB)** |
| (84) Designated Contracting States:<br>**BE DE FR GB NL SE** | |
| (58) References cited:<br>GB-A- 333 790<br>GB-A- 870 255<br>GB-A-1 233 011<br>GB-A-2 039 614<br>GB-A-2 070 135<br>US-A-2 966 145<br>US-A-3 418 981<br>US-A-4 098 248<br>US-A-4 324 214<br>US-A-4 445 467 | (74) Representative: **Colgan, Stephen James et al**<br>**CARPMAELS & RANSFORD 43 Bloomsbury**<br>**Square**<br>**London WC1A 2RA. (GB)** |

Courier Press, Leamington Spa, England.

## Description

### 1. Technical Field

The present invention relates to engines and more particularly relates to a large, two cycle stratified charge engine capable of efficiently operating on normally gaseous fuels over a wide range of operating loads.

### 2. Background Art

Highly reliable, low maintenance, two-cycle engines have long been used to power a variety of equipment in environments where the equipment is left unattended for long periods of time. One such environment exists in the oil industry where engines of this type drive gas compressors, oil field beam pumping units, waterflood pumps, water disposal pumps, and similar equipment in remote locations. A large number of these engines have been adapted to run on fuels which are gaseous at ambient conditions (e.g. natural gas, propane, butane, hereinafter collectively referred to as "gas") and which are usually readily available at such operational sites.

Such large, two-cycle gas-powered engines normally have low compression pressures to avoid "knock" which is aggravated by the long combustion flame travel that is inherent in the larger bore cylinders and the slow speed (i.e. RPMs) of these types of engines. These low compression pressures present a real problem in maintaining proper air-fuel mixtures over the wide range of loads (i.e. idle speed to full load) which are normally encountered during prolonged operation.

Further, since two-cycle, gas-powered engines of this type are designed to give their optimum performance when operating at full load and speed, any load or speed below full load or speed results in exhaust gas contamination of the incoming fuel charge which, in turn, causes misfiring, poor acceleration, high fuel consumption, and high exhaust emissions.

In an attempt to alleviate these problems, low loads on such engine are carried at high air-fuel ratios, with the mixture being progressively enriched as the load increases. However, this technique oftentimes still results in misfiring and poor overall performance whenever the engine experiences extremely light loads (e.g. idle speed). Accordingly, such light loads are either not attempted with a particular engine or the air intake of the engine has to be throttled as is done in other types of conventional spark-ignited engines; this latter approach being an undesirable alternative in two-cycle engines of the type described above.

Although the problems of large two-cycle, gas-powered engines misfiring at light loads and the causes therefor have long been recognised in the art, unfortunately, this problem still exists in many, if not all, of the known engines of this type in use today. For example, one of the most widely used two-cycle, gas-powered engines in the oil industry today is designed to run on unthrottled air with the fuel charge to the engine being controlled by an adjustable injector valve and a governor-regulated valve in the fuel line. In normal operation, the injector valve is manually set to remain open for a defined length of time which allows the governor-regulated valve to provide sufficient fuel to operate the engine over a defined range of expected operating loads. Where the loads on the engine remain in this defined range, sufficient fuel (i.e. gas) is supplied to the engine cylinder to mix with the unthrottled air to provide an adequate combustible mixture in the combustion chamber. However, when the loads (i.e. idle speeds) drop below this range, as they routinely do, the governor-regulated valve responds to restrict gas flow to the injector valve. The resulting air-fuel mixture becomes too lean to be ignited and the engine misfires. This misfiring, in turn, causes the engine speed to drop drastically and the governor-regulated valve immediately responds to substantially increase the gas flow to the engine. The air-fuel mixture now becomes too rich and, when ignited, the mixture instantly detonates instead of burning evenly thereby causing the engine to experience a severe overload. As is recognized in the art, such alternating misfirings and overloadings over extended periods often result in substandard engine performance and in substantially increased maintenance costs and downtime.

Therefore, it can be seen that this type of two-cycle, gas-powered engines need to be modified so that a proper combustible mixture is maintained throughout the operating range of the engine even under loads as light as those encountered at idling speeds.

It is known from GB—A—2039614 to provide a two-stroke fuel injection engine comprising an engine block;

at least one cylinder bore in said engine block;

a piston slidably mounted in said cylinder bore having a crown thereon;

a recess formed in said crown; and

a head mounted on said engine block; and a chamber formed in said head, said recess and said chamber cooperating to form a combustion chamber therebetween when said piston is at top dead center in said cylinder bore said chamber having a diameter substantially less than the diameter of said cylinder bore.

The present invention provides a two-cycle stratified charge, unthrottled air, gas-powered engine which is capable of efficiently operating over a wide range of loads including those light loads which previously have resulted in misfirings in known engines of this type.

According to the present invention such an engine is characterised by the following combination of features:—

an engine block;

at least one cylinder bore in said engine block;

a piston slidably mounted in said cylinder bore having a crown thereon;

a recess formed in said crown, having a dia-

meter substantially less than the diameter of said crown, a cylinder head mounted on said engine block; and a chamber formed in said cylinder head, said recess and said chamber cooperating to form a combustion chamber therebetween when said piston is at top dead center in said cylinder bore, said chamber having a diameter substantially less than the diameter of said cylinder bore characterised in that:

a) said chamber is a deep ovate-shaped chamber comprising a cylindrical portion at the piston side and an integral ovate-shaped, domed portion at the other side;

b) said recess is cup-shaped and flat-bottomed;

c) said recess and said chamber are axially aligned with each other and with the center line of the cylinder;

d) said combustion chamber formed by said chamber and said recess at the top dead center of the piston is so shaped that the maximal axial depth is substantially equal to the maximal transversal width;

e) a beveled surface is provided on the upper periphery of said piston crown; and

f) a tapered surface is provided on said cylinder head substantially parallel to said beveled surface and extending outwardly from the bottom periphery of said chamber in said cylinder head to a point adjacent the periphery of said cylinder bore; said beveled and tapered surfaces defining a low clearance squish area therebetween when said piston is at top dead center in said cylinder bore.

The combustion chamber, itself, in one embodiment, may be formed of a relatively-elongated "egg-shaped" upper section which is formed in the head and an open, deep flat-bottomed cup-shaped lower section which is formed in upper surface of the piston crown. Both the upper and lower sections have diameters that are substantially less than that of the cylinder bore. The upper section of the combustion chamber is formed of a lower cylindrical potion which merges integrally into an ovate-shaped domed upper portion. The small diameter, deep egg-shaped upper portion in the head coupled with the small diameter, deep flat-bottomed, cup-shaped lower section in the piston provides a combustion chamber effectively as deep as it is wide. This allows a fuel charge supplied by an injector valve in the top of the upper section to mix with the air being compressed by the upward stroke of the piston and to remain in the uppermost portion of the chamber to provide a stratified charge of a rich air-fuel mixture around the ignition means (e.g. spark plugs) which are also positioned near the top of the upper section. By providing such a stratified charge, the air-fuel mixture which surrounds the ignition means is always rich enough to support ignition and to quickly spread the resulting flame to the weaker mixture present in the lower section of the combustion chamber.

Further, the close clearance, squish area in addition to providing additional air into the upper section of the combustion chamber also has the effect of reducing or breaking the swirl of the weaker mixture in the lower section of the combustion chamber while increasing the turbulence, hence mixing, of the richer mixture in the upper section. This results in concentrating and maintaining the stratified charge, i.e. richer mixture, in the uppermost portion of the upper section to insure ignition and a rapid burning of the stratified charge while, at the same time, retaining the weaker mixture in the lower portion of the chamber.

Fuel is regulated through a governor-controlled valve in a positive pressurized feed line to the injector valve which, in turn, is timed to open and close at predetermined angles of crankshaft rotation. More specifically, fuel injection is begun just after the piston begins its upward stroke but before either the air inlet or exhaust ports are closed and is continued until just after these ports are closed. The injector valve always stays open for this defined angle of crankshaft rotation. Fuel is supplied to the injector valve through a low pressure feed line having a regulator valve therein that, in turn, is responsive to a governor on the engine to increase or decrease fuel flow to the injector. However, even when the speed of the engine is extremely low due to a light load thereon, sufficient fuel is still supplied through the injector to provide an adequate stratified charge in the combustion chamber of the present invention to insure ignition and prevent misfiring.

Brief Description of the Drawings

The actual construction, operation, and apparent advantage of the present invention will be better understood by referring to the drawings in which like numerals identify like parts and in which:

FIG. 1 is a perspective view of a two-cycle engine in accordance with the present invention;

FIG. 2 is a sectional view of the upper end of the engine block of FIG. 1 showing the head and piston assembly of the present invention;

FIG. 3 is a perspective view, partly in section, of the fuel system of the present invention;

FIG. 4 is an enlarged, partly in section, view of the fuel regulator valve used in the fuel supply system of FIG 3; and

FIG. 5 is a timing diagram for the engine of FIG. 1.

Best Mode for Carrying out the Invention

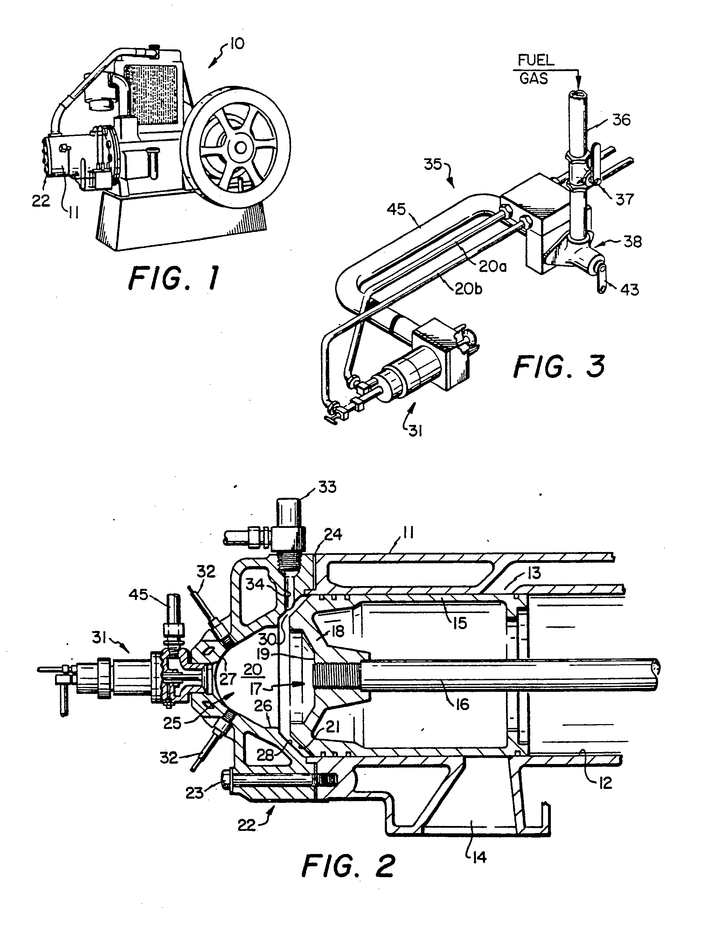

Referring more particularly to the drawings, FIG. 1 is a representative of a typical, commercially-available engine 10 which has been modified in accordance with the present invention. As illustrated, engine 10 is a single cylinder, two-cycle horizontal gas engine of the type commonly used to drive oil field equipment, e.g. Ajax Two-Cycle Horizontal Gas Engine, available from Cooper Energy Services, AJAX PRODUCTS, Corry, PA and disclosed on page 1618 of Com-

posite Catalog of Oil Field Equipment and Services, 33rd revision, 1978—79, published by World Oil, Gulf Publishing Co., Houston, Texas.

As shown in FIG. 2, engine block 11 of engine 10 is basically the same as that used in typical known two-cycle engines of this type. Block 11 has a cylinder bore 12 formed therein which, in turn, has air inlet port 13 and exhaust port 14 opening into the lower portion thereof. The terms "upper" and "lower" are used throughout as if cylinder bore 12 were in a vertical position with "upper" referring to the direction toward the head and (to the left of FIG. 2) of block 11 and "lower" referring to the direction toward the opposite or crank end (to the right in FIG. 2) of the block.

In accordance with the present invention, a specially constructed crosshead piston 15 is secured to the end of rod 16 and is slidably mounted within bore 12. A deep, cup-shaped recess 17 having a flat bottom 19 is formed in the crown 18 of piston 15. Recess 17 forms the lower section of combustion chamber 20 when piston 12 is in its top dead center (T.D.C.) position. The diameter of recess 17 is substantially less than the diameter of crown 18 of piston 15 (e.g. recess diameter approximately 55% of crown diameter). A beveled, annular surface 12 is provided around the upper periphery of crown 18 for a purpose described below.

Head 22 of the present invention is mounted on block 11 by means of bolts 23 or the like. Gasket 24 is provided between head 22 and block 11 as will be understood by those skilled in the art. The upper section 25 of combustion chamber 20 is formed in the head 22 and has a lower, cylindrical portion 26 which integrally merges into an upper ovate- or egg-shaped domed portion 27. The diameter of lower cylindrical portion 26 is substantially less than the diameter of bore 12 (e.g. lower portion diameter is equal to approximately 60% of bore diameter). Head 22 has a tapered annular surface 28 thereon which extends from the approximate lower end of upper section 25 of combustion chamber 20 outward towards the lower surface of head 22 at a point adjacent the upper periphery of cylinder bore 12. Tapered surface 28 is substantially parallel to beveled surface 21 on crown 18 and these two surfaces define a low clearance squish area 30 therebetween when piston 15 is in a top dead center position.

As can be seen in Figure 2, the chamber 20 in the cylinder head and the recess 17 in the piston are axially aligned in the centre line of the cylinder. Thus the chamber 20 and recess 17 are aligned with each other and concentrically positioned with respect to the cylinder.

Injector valve 31 is mounted in head 22 and extends into the uppermost point of combustion chamber 20. Injector valve 31 may be any injector valve that is capable of supplying a gaseous fuel, e.g. natural gas, into chamber 20 and may be hydraulically, mechanically, or electrically operated. As shown, injector valve 20 is a hydraulically operated valve (operated by hydraulic lines 20a, 20b; see Figure 3) of the type disclosed and fully described in U.S. Patent 3,872,844, issued March 25, 1975, and incorporated herein by reference.

One or more ignition means (e.g. spark plugs 32; two shown in Figure 2) extend through head 22 into the upper section 25 combustion chamber 20 at points as close to the top of the combustion chamber and to injector valve 31 as is practical. As understood in the art, power for ignition means 32 can be provided by any known means, e.g. an electronic capacitor ignition system having a battery supply and/or generator; a low tension pulse type magneto; or by an equivalent system. As is common in engines of this type, a fitting 33 cooperates with passage 34 in head 22 to supply high pressure air or gas from a source (not shown) for starting the engine 10.

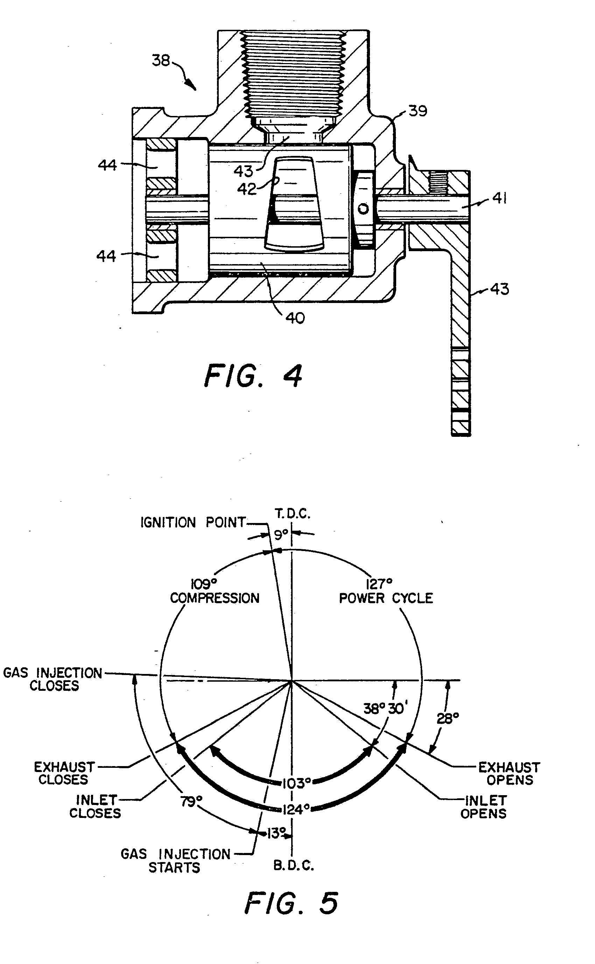

The fuel supply system 35 of the present invention is illustrated in FIGS. 3 and 4. Fuel, e.g. natural gas, is fed at an approximate pressure of 12 psi through an on-off valve 37 in line 36 to fuel regulator valve 38. Valve 38 (FIGS. 4 and 5) is comprised of housing 39 having a core 40 rotatably mounted therein by means of shaft 41. Core 40 has an opening 42 therein which cooperates with inlet 43 in housing 39 to regulate fuel flow through valve 38. As shown in FIG. 4, opening 42 is tapered to permit very sensitive fuel control upon only slight rotation of core 40 within housing 39. Arm 34 is affixed at its upper end to the outer end of shaft 41 and is adapted to be connected at its lower end by linkage or the like (not shown) to a governor (not shown) on engine 10. It can be seen that fuel will flow through inlet 43, opening 42, and out outlets 44 of valve 39 into fuel supply line 45 to injector valve 31 in head 22 and that the amount of fuel is regulated by rotation of core 40 within valve 38 in response to the engine governor which, in turn, senses changes in engine speeds as is known in the art.

In operation, engine 10 is started with high pressure air or gas through passage 34 as is known in the art. Piston 15 moves downward in bore 12 and as it uncovers exhaust port 14, most of the products in the cylinder will escape therethrough into the atmosphere or into an exhaust manifold (not shown). Immediately afterwards, piston 15 begins to uncover air intake port 13 and scavenge and/or induction air is pumped therethrough into bore 12 to "loop" scavenge the exhaust gases from bore 12 as will be understood by those skilled in the art. After piston 15 uncovers both inlet port 13 and exhaust port 14, it reaches bottom dead center (B.D.C.) (not shown). Piston 15 then begins its upward stroke in bore 12 and closes air inlet port 12 and exhaust port 14 as it moves upward past same. The air in bore 12 and any remaining exhaust gases are then compressed by the continued upward movement of piston 15.

Fuel is injected into the uppermost part of combustion chamber 20 through injector valve 31 which is timed to open and close at a predetermined angle of crankshaft rotation. As can be seen from the timing diagram in FIG. 5, injector valve 31 is opened just after piston 15 begins its upward stroke and injection of fuel, e.g. gas, is started while both air inlet port 13 and exhaust port 14 are open. Gas injection is continued until after both inlet port 12 and exhaust port 14 are closed. This timing is such that injector valve 31 is closed before the scavenged air in bore 12 is compressed sufficiently to match the injected gas supply feed pressure. As piston 15 moves top dead center (T.D.C.), see FIG. 2, beveled surface 21 on crown 18 approaches tapered surface 28 on head 22 to "squish" additional air into the upper section 25 of combustion chamber 20 to mix with the fuel from injector valve 31.

The small diameter, deep egg-shaped upper section 25 in head 22 coupled with the deep, flat-bottom cup-shaped lower section 17 in crown 18 has the beneficial effect of making combustion chamber 20 as deep as it is wide. This allows chamber 20 to contain and retain a relatively rich mixture in upper section 25 while the exhaust-contaminated weaker gas/air mixture is contained primarily in the lower section 17 thereof. It is noted that the flat bottom 19 of recess 17 prevents uniform swirling of gases therein which aids in keeping exhaust-contaminated gases from flowing into upper section 25.

Further, the close clearance squish area 30 has the effect of further reducing or breaking the swirling of the exhaust-contaminated mixture in lower section 17 of chamber 20 while, at the same time, beneficially increasing the swirl (i.e. turbulence and mixing) in upper section 25. Accordingly, squish area 30 provides an effective barrier between the upper and lower sections of chamber 20 which serves to substantially segregate the rich, stratified charge in the upper section 25 from the weak, exhaust-contaminated mixture in lower section 17.

Thus, the mixture at spark ignition means 32 is always rich enough to support rapid burning upon ignition and to spread the flame quickly to burn the weaker mixture in the lower section 17. This stratified charge effect allows the gas-powered, unthrottled air engine 10 to operate at partial or light loads (e.g. idle speeds) without experiencing misfirings or the detonation which results in overloading. Also, higher than normal compression ratios can be incorporated into the stratified charge engine 10 and due to the improved performance over the wide range of operating loads, both the fuel consumption and undesirable exhaust emissions will be lower.

## Claims

1. A two-cycle, stratified charge, unthrottled air, gas-powered engine comprising:
an engine block (11);
at least one cylinder bore (12) in said engine block;
a piston (15) slidably mounted in said cylinder bore (12) having a crown (18) thereon;
a recess (17) formed in said crown (18), having a diameter substantially less than the diameter of said crown, a cylinder head (12) mounted on said engine block; and a chamber (20) formed in said cylinder head (22), said recess (17) and said chamber (20) cooperating to form a combustion chamber therebetween when said piston is at top dead center in said cylinder bore, said chamber (20) having a diameter substantially less than the diameter of said cylinder bore characterised in that:

a) said chamber (20) is a deep, ovate-shaped chamber comprising a cylindrical portion (26) at the piston side and an integral ovate-shaped, domed portion (27) at the other side;

b) said recess (17) is cup-shaped and flat-bottomed;

c) said recess (17) and said chamber (20) are axially aligned with each other and with the center line of the cylinder;

d) said combustion chamber formed by said chamber (20) and said recess (17) at the top dead center of the piston is so shaped that the maximal axial depth is substantially equal to the maximal transversal width;

e) a beveled surface (21) is provided on the upper periphery of said piston crown (18); and

f) a tapered surface (28) is provided on said cylinder head (22) substantially parallel to said beveled surface (21) and extending outwardly from the bottom periphery of said chamber (20) in said cylinder head (22) to a point adjacent the periphery of said cylinder bore; said beveled and tapered surfaces (21, 28) defining a low clearance squish area (30) therebetween when said piston is at top dead center in said cylinder bore.

2. The engine of claim 1 characterised by including;
means (31) for injecting gaseous fuel into the uppermost point in said deep, ovate-shaped chamber (20) and
ignition means (32) for igniting said gaseous fuel positioned in said ovate-shaped chamber as near to said uppermost point as is practical.

3. The engine of claim 2 characterised in that said ignition means (32) comprises:
at least one spark plug.

4. The engine of claim 2 characterised in that said means for injecting gaseous fuel comprises:
an injector valve (31) mounted through said head (22) and opening into said ovate-shaped chamber (20) at said uppermost point; said injector valve (31) having a fuel supply line (36) connected thereto; and
a regulator valve (38) in said fuel supply line, said regulator valve (38) adapted to be responsive to a governor on said engine to regulate fuel flow therethrough.

5. The engine of claim 4 characterised in that said regulator valve (38) comprises:
a housing (39) having an inlet and an outlet;
a core (40) rotatably mounted in said housing;
a tapered opening (42) in said core which cooperates with said inlet (43) in said housing to regulate fuel flow through said regulator valve in response to rotation of said core; and

means (43) for rotating said core adapted to be connected to an engine governor.

## Patentansprüche

1. Zweitakt-Gasmotor mit geschichteter Ladung und ungedrosselter Luftzuführung, mit:

einem Motorblock (11);

mindestens einer Zylinderbohrung (12) in dem Motorblock;

einem Kolben (15), der in der Zylinderbohrung (12) verschiebbar montiert ist und einem Kolbendeckel (18) aufweist;

einer Vertiefung (17) in dem Kolbendeckel (18), deren Durchmesser wesentlich geringer als der Durchmesser des Kolbendeckels ist;

einem auf dem Motorblock montierten Zylinderkopf (22);

und mit einer in dem Zylinderkopf (22) geformten Kammer (20), wobei die Vertiefung (17)· und die Kammer (20) zur Bildung einer Verbrennungskammer zusammenarbeiten, wenn sich der Kolben in dem oberen Totpunkt in der Zylinderbohrung befindet, wobei die Kammer (20) einen wesentlich kleineren Durchmesser als die Zylinderbohrung hat, dadurch gekennzeichnet, daß:

a) die Kammer (20) einen tiefe, eiförmige Kammer ist, die einen zylindrischen Teil (26) an der Kolbenseite und einen integralen, eiförmigen, domartigen Teil (27) an der anderen Seite aufweist;

b) die Vertiefung (17) schalenförmig mit flachem Boden ist;

c) die Vertiefung (17) und die Kammer (20) axial miteinander sowie mit der Mittellinie des Zylinders fluchten;

d) die von der Kammer (20) und der Vertiefung (17) im oberen Totpunkt des Kolbens gebildete Verbrennungskammer so geformt ist, daß die maximale axiale Tiefe im westentlichen gleich der maximalen Breite ist;

e) eine abgeschräte Fläche (21) am oberen Umfang des Kolbendeckels (18) vorgesehen ist; und daß

f) eine geneigte Fläche (28) an dem Zylinderkopf (22) vorgesehen ist, die im wesentlichen parallel zu der abgeschrägten Fläche (21) verläuft und sich vom unteren Umfang der Kammer (20) in dem Zylinderkopf (22) nach außen zu einer Stelle erstreckt, die in der Nähe des Umfangs der Zylinderbohrung liegt; wobei die geneigte und die schräge Fläche (21, 28) dazwischen einen Spritzbereich (30) von kleinem Abstand bilden, wenn sich der Kolben im oberen Totpunkt in der Zylinderbohrung befindet.

2. Motor nach Anspruch 1, gekennzeichnet durch Mittel (31) zum Einspritzen von gasförmigem Brennstoff am obersten Punkt der tiefen, eiförmigen Kammer (20) und durch Zündmittel (32) zum Zünden des gasförmigen Brennstoffs, der sich in der eiförmigen Kammer so nahe wie möglich an dem obersten Punkt befindet.

3. Motor nach Anspruch 2, dadurch gekennzeichnet, daß das Zündmittel (32) zumindest eine Zündkerze aufweist.

4. Motor nach Anspruch 2, dadurch gekennzeichnet, daß das Mittel zum Einspritzen von gasfömigem Brennstoff aufweist:

ein Einspritzventil (31), das in die eiförmige Kammer (20) an dem obersten Punkt durch den Zylinderkopf (22) und eine Öffnung eingesetzt ist, wobei an das Einspritzventil (31) eine Brennstoffleitung (36) angeschlossen ist; und

ein Reglerventil (38) in der Brennstoffleitung, das auf einen Motorregler anspricht, um die Brennstoffströmung zu regeln.

5. Motor nach Anspruch 4, dadurch gekennzeichnet, daß das Reglerventil (38) aufweist:

ein Gehäuse (39) mit einem Einlaß und einem Auslaß;

einen Ventilkörper (40), der in dem Gehäuse drehbar montiert ist;

eine sich verengende Öffnung (42) in dem Ventilkörper, die mit dem Einlaß (43) des Gehäuses zusammenarbeitet, um die Brennstoffströmung durch das Reglerventil in Abhängigkeit von einer Drehung des Ventilkörpers zu regeln; und

Mittel (43) zum Drehen des Ventilkörpers, wobei das Mittel an einen Motorwächter anschließbar ist.

## Revendications

1. Moteur à gaz à deux temps, à charge stratifiée, à débit d'air non étranglé, comportant:

un bloc moteur (11);

au moins un alésage cylindrique (12) dans ledit bloc moteur;

un piston (15) monté coulissant dans ledit alésage cylindrique (12) et comprenant une tête (18);

un évidement (17) formé dans ladite tête (18) et présentant un diamètre sensiblement inférieur au diamètre de ladite tête, une culasse (12) montée sur ledit bloc moteur; et une chambre (20) formée dans ladite culasse (22), ledit évidement (17) et ladite chambre (20) coopérant pour former entre eux une chambre de combustion lorsque ledit piston se trouve au point mort haut dans ledit alésage cylindrique, ladite chambre (20) ayant un diamètre sensiblement inférieur au diamètre dudit alésage cylindrique, caractérisé en ce que:

a) ladite chambre (20) est une chambre profonde de forme ovoïde comportant un portion cylindrique (26) côté piston et une portion ovïde en dôme, d'un seul tenant (27) de l'autre côté;

b) ledit évidement (17) est en forme de coupelle à fond plat;

c) ledit évidement (17) et ladite chambre (20) sont alignés axialement l'un avec l'autre et avec l'axe du cylindre;

d) ladite chambre de combustion formée par ladite chambre (20) et ledit évidement (17) au point mort haut du piston a une forme telle que sa profondeur axiale maximale est sensiblement égale à sa largeur transversale maximale;

e) une surface chanfreinée (21) est prévue sur la périphérie supérieure de ladite tête de piston (18); et

f) une surface conique (28) est prévu sur ladite culasse (22) substantiellement parallèlement à ladite surface chanfreinée (21) et s'étendant vers l'extérieur, depuis la périphérie inférieure de ladite chambre (20) de ladite culasse (22) jusqu'à un point voisin de la périphérie dudit alésage cylindrique; ladite surface chanfreinée et ladite surface conique (21, 28) définissant entre elles une surface de giclement (30) à faible espace mort lorsque ledit piston se trouve au point mort haut dans ledit alésage cylindrique.

2. Moteur selon la revendication 1, caractérisé en ce qu'il comporte:

un moyen (34) pour injecter du carburant gazeux au point le plus haut dans ladite chambre profonde de forme ovoïde (20) et

un moyen d'allumage (32) pour allumer ledit carburant gazeux, placé dans ladite chambre de forme ovoïde aussi près que possible dudit point le plus haut.

3. Moteur selon la revendication 2, caractérisé en ce que ledit moyen d'allumage (32) comporte au moins une bougie d'allumage.

4. Moteur selon la revendication 2, caractérisé en ce que ledit moyen pour injecter du carburant gazeux comporte:

un injecteur (31) monté à travers ladite culasse (22) et s'ouvrant dans ladite chambre de forme ovoïde (20) audit point le plus haut; ledit injecteur (31) ayant une conduite d'alimentation en carburant (36) qui lui est reliée; et

une vanne de régulation (38) dans ladite conduite d'alimentation en carburant, ladite vanne de régulation (38) étant prévue pour réguler le débit de carburant qui le traverse en réponse à un régulateur monté sur ledit moteur.

5. Moteur selon la revendication 4, caractérisé en ce que ladite vanne de régulation (38) comporte:

un carter (39) présentant une entrée et une sortie;

un noyau (40) monté rotatif dans ledit carter;

une ouverture conique (42) dans ledit noyau, qui coopère avec ladite entrée (43) prévue dans ledit carter pour réguler le débit de carburant à travers ladite vanne de régulation en réponse à la rotation dudit noyau; et

un moyen (43) pour faire tourner ledit noyau, prévu pour être relié à un régulateur du moteur.

**FIG. 1**

FUEL
GAS

**FIG. 3**

**FIG. 2**

1

FIG. 4

FIG. 5

2